(19) Europäisches Patentamt
European Patent Office
Office européen des brevets

(11) EP 2 418 469 B1

(12) **EUROPEAN PATENT SPECIFICATION**

(45) Date of publication and mention of the grant of the patent:
**28.11.2018 Bulletin 2018/48**

(21) Application number: **10761465.3**

(22) Date of filing: **09.04.2010**

(51) Int Cl.:
*G01M 11/00* (2006.01)   *C03B 37/025* (2006.01)
*G01B 11/10* (2006.01)   *G02B 6/00* (2006.01)
*G02B 6/032* (2006.01)   *G02B 6/02* (2006.01)

(86) International application number:
**PCT/JP2010/002608**

(87) International publication number:
**WO 2010/116762 (14.10.2010 Gazette 2010/41)**

(54) **HOLE DIAMETER MEASURING METHOD AND DEVICE FOR HOLEY OPTICAL FIBER, AND MANUFACTURING METHOD AND DEVICE FOR HOLEY OPTICAL FIBER**

VERFAHREN UND VORRICHTUNG ZUR MESSUNG DER LOCHDURCHMESSER IN MIKROSTRUKTURIERTEN GLASFASERN SOWIE VERFAHREN UND VORRICHTUNG ZUR HERSTELLUNG MIKROSTRUKTURIERTER GLASFASERN

PROCÉDÉ ET DISPOSITIF POUR MESURER LE DIAMÈTRE DU TROU D'UNE FIBRE OPTIQUE À TROU, ET PROCÉDÉ ET DISPOSITIF DE FABRICATION DE FIBRE OPTIQUE À TROU

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **09.04.2009 JP 2009094851**

(43) Date of publication of application:
**15.02.2012 Bulletin 2012/07**

(73) Proprietor: **Fujikura Ltd.**
**Tokyo 135-8512 (JP)**

(72) Inventors:
• **ISHIDA, Itaru**
**Sakura-shi**
**Chiba 285-8550 (JP)**
• **EMORI, Shigeru**
**Sakura-shi**
**Chiba 285-8550 (JP)**
• **ABIRU, Tomio**
**Sakura-shi**
**Chiba 285-8550 (JP)**

(74) Representative: **Cabinet Plasseraud**
**66, rue de la Chaussée d'Antin**
**75440 Paris Cedex 09 (FR)**

(56) References cited:
**WO-A1-01/63328**       **WO-A1-2005/090939**
**WO-A1-2005/095930**   **JP-A- 1 091 007**
**JP-A- 2003 042 894**   **JP-A- 2009 007 201**
**JP-B2- 4 084 762**      **US-A- 5 880 825**
**US-B1- 6 313 909**

**Description**

Technical Field

The present invention relates to a hole diameter measuring method and device for a holey optical fiber in which a plurality of holes are formed in silica glass that constitutes an optical fiber, and to a manufacturing method and device for a holey optical fiber that uses this method and device.

Background Art

In a holey optical fiber, a plurality of holes are formed along the lengthwise direction of the optical fiber in silica glass that constitutes an optical fiber. Such an optical fiber is called a photonic crystal fiber (PCF). This holey optical fiber has optical characteristics that cannot be realized in a conventional optical fiber due to the existence of holes. For example, in this holey optical fiber, the light confining effect of the optical fiber is heightened, and the bending loss is reduced by the existence of the holes.

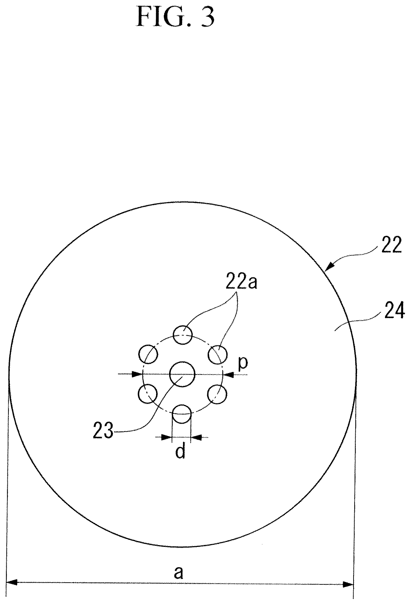

FIG. 3 is a cross-sectional view that shows an example of a holey optical fiber bare wire. The holey optical fiber bare wire 22 shown in FIG. 3 has a core glass layer 23 with a high refractive index, and a cladding glass layer 24 with a low refractive index that is disposed around the periphery thereof. A plurality of holes 22a are formed along the lengthwise direction of the holey optical fiber bare wire 22 in the cladding glass layer 24 in the vicinity of the core glass layer 23. This kind of holey optical fiber bare wire 22 is put to practical use as a low bending loss type optical fiber in optical communication networks in homes.

The holey optical fiber can be manufactured by drawing an optical fiber base material (preform) in which holes are formed. Methods of forming holes in an optical fiber base material include for example a drill method that pierces the optical fiber base material using a drill.

When drawing an optical fiber base material in which holes are formed, pressurizing is performed on the holes on one side of this optical fiber base material. By controlling the pressure that pressurizes these holes, adjustment of the hole diameter in the holey optical fiber bare wire after drawing is possible. That is, a holey optical fiber that has the desired hole diameter is obtained by control of the pressure.

In the holey optical fiber bare wire 22 shown in FIG. 3, the hole diameter d that is the inner diameter of each hole 22a, and the position p of the hole 22a are important parameters relating to the optical property. For example, the bending loss of the holey optical fiber bare wire changes greatly depending on the size of the hole diameter d and/or the position p of the hole 22a. That is, by making the hole diameter d and the position p of the hole 22a suitable values, a holey optical fiber bare wire 22 with a small bending loss is obtained.

Among these parameters, the position p of the hole 22a is mostly determined in the hole opening process that forms holes in the optical fiber base material. Accordingly, the position p of the hole 22a, that is, the distance from the center of the optical fiber to the hole 22a, can be made constant in an optical fiber bare wire that is manufactured if the hole forming process is performed in the accurate location when opening holes in the optical fiber base material.

In contrast to this, the hole diameter d in the drawing process fluctuates due to various causes, such as the hole internal pressure, the furnace temperature, the drawing speed, and the like. Therefore, in order to stably manufacture the holey optical fiber bare wire 22 having the desired hole diameter d, measuring the hole diameter d in-line during the manufacturing process is desired.

For example, if it is possible to measure the hole diameter in-line and adjust the hole internal pressure of the optical fiber base material by a feedback control according to the measurement results, the holey optical fiber bare wire 22 having the desired hole diameter d is obtained over the lengthwise direction of the holey optical fiber.

As a technique to measure the hole diameter in-line in the holey optical fiber manufacturing process, there is a method that is disclosed for example in Patent Document 1. This method consists of irradiating the side of an optical fiber with light from a laser diode (LD), and then measuring the hole diameter based on the interference pattern of the forward scattering light produced by this light irradiation.

Patent Document 2 discloses a technique of making light incident on an optical fiber in-line from one end and imparting a bend to this optical fiber, and measuring the hole diameter based on changes in the rearward scattering light produced by the bend.

Patent Document 3 relates to a detection system that can be incorporated into an optical fiber manufacturing process for optically detecting air lines in optical fibers as they are being manufactured.

Patent Document 4 relates to an apparatus and a corresponding method for detecting defects, such as air lines, in optical waveguide fibers.

Patent Document 5 relates to an apparatus and a method for detecting a defect in an optical fiber, and a plastic optical fiber manufacturing apparatus that can detect a defect in the optical fiber upon manufacture process.

Patent Document 6 relates to the manufacturing method and manufacturing installation of the optical fiber comprising a hole therein.

[Patent Documents]

[Patent Document 1] Japanese Patent No. 3433238
[Patent Document 2] Japanese Patent No. 4084762
[Patent Document 3] US Patent No. 5880825
[Patent Document 4] US Patent No. 6313909
[Patent Document 5] WO2005/095930
[Patent Document 6] JP Patent No. 2009/007201

Disclosure of the Invention

Problem that the Invention is to solve

Generally, a holey optical fiber has four or more holes 22a as shown in FIG. 3. Therefore, in the method of analyzing an interference pattern such as the method disclosed in Patent Document 1, the interference pattern becomes a complicated shape due to the plurality of holes. As a result, the analysis of the diameter of a hole becomes difficult. Moreover, in this method, the interference pattern changes greatly depending on the direction in which the light is irradiated. Therefore, a setup is necessary that always radiates light from the same direction to an optical fiber. Normally, during the drawing of an optical fiber base material, rotation and vibration occur in the optical fiber to some extent. For that reason, irradiation of laser diode light always from the same direction to the optical fiber is difficult to perform in reality.

In the method disclosed in Patent Document 2, since a bend is imparted to the optical fiber, it is necessary to prevent the optical fiber from being damaged by this bend. Also, since it is necessary to impart a bend, the productivity of the optical fiber drops. Furthermore, there is also a problem of this method only being applicable to a holey optical fiber in which the dependency of the bending loss on the hole diameter is large.

The present invention was achieved in view of the above circumstances, and has an object to provide a hole diameter measuring method and device for a holey optical fiber that can measure the hole diameter of an optical fiber while increasing the productivity of the optical fiber without causing damage to the optical fiber, and a manufacturing method and device for a holey optical fiber that uses these.

Means for solving the Problem

(1) A hole diameter measuring method for a holey optical fiber according to the present invention is a hole diameter measuring method for a holey optical fiber that, when manufacturing a holey optical fiber bare wire by heating and melting a holey optical fiber base material and drawing it, measures a hole diameter of the optical fiber bare wire, the method including: a step of continuously irradiating parallel light rays from a side of the holey optical fiber bare wire that is obtained by the drawing to the holey optical fiber bare wire; a step of continuously detecting with a detecting portion a forward scattering light that is generated by an irradiation of the parallel light rays; and a step of calculating the hole diameter using a correlation relationship between a scattering intensity pattern of the forward scattering light that is detected and the hole diameter.

(2) In the hole diameter measuring method for a holey optical fiber according to (1) above, it is preferable to irradiate the parallel light rays to a holey optical fiber bare wire on which a covering is not formed.

(3) In the hole diameter measuring method for a holey optical fiber according to (1) above, it further includes: a step of generating a forward scattering light by irradiating the parallel light rays from a side of a hole-less optical fiber bare wire to the hole-less optical fiber bare wire and obtaining a scattering intensity pattern of the forward scattering light; a step of finding a difference spectrum between the scattering intensity pattern that is obtained by the hole-less optical fiber bare wire and the scattering intensity pattern that is obtained by the holey optical fiber bare wire; and a step of finding the hole diameter using a correlation relationship between the difference spectrum and the hole diameter, the predetermined correlation relationship being the correlation between the hole diameter and the width (W) of a central portion of the difference spectrum.

(4) In the hole diameter measuring method for a holey optical fiber according to (1) above, the parallel light rays may be irradiated to the optical fiber bare wire from at least two directions.

(5) In the hole diameter measuring method for a holey optical fiber according to (1) above, it may measure a distance between the holey optical fiber bare wire and the detecting portion, and continuously detect the forward scattering light while adjusting a position of the detecting portion based on a measurement result so that the distance is constant.

(6) A hole diameter measuring device for a holey optical fiber is a hole diameter measuring device for a holey optical fiber that, when manufacturing a holey optical fiber bare wire by heating and melting a holey optical fiber base material and drawing it, measures a hole diameter of the optical fiber bare wire, having: an irradiating device that continuously irradiates parallel light rays from a side of the holey optical fiber bare wire to the holey optical fiber bare wire; a detecting portion that continuously detects a forward scattering light that is generated by an irradiation of the parallel light rays; and a computing portion that computes and judges the hole diameter of the holey optical fiber bare wire using a correlation relationship between a scattering intensity pattern of the forward scattering light that is detected and the hole diameter.

(7) The hole diameter measuring device for a holey optical fiber according to (6) above may have a plurality of the irradiating devices and the detecting portions.

(8) The hole diameter measuring device for a holey optical fiber according to (6) above may further include an optical fiber detector that measures a distance between the detecting portion and the optical fiber bare wire.

(9) A manufacturing method for a holey optical fiber according to the present invention is a manufacturing method for a holey optical fiber that manufactures a holey optical fiber bare wire by heating and melting a holey optical fiber base material and drawing it, having: a step of continuously irradiating parallel light rays from a side of the holey optical fiber bare wire to the holey optical fiber bare wire; a step of continuously detecting with a detecting portion a forward scattering light that is generated by an irradiation of the parallel light rays; a step of calculating a hole diameter of the holey optical fiber bare wire using a correlation relationship between a scattering intensity pattern of the forward scattering light that is detected and the hole diameter; and a step of adjusting a pressure in a hole by controlling a flow rate of a gas that is supplied to the hole of the holey optical fiber base material in accordance with the calculated hole diameter.

(10) The manufacturing method for a holey optical fiber according to (9) above further includes a step of generating a forward scattering light by irradiating the parallel light rays from a side of a hole-less optical fiber bare wire to the hole-less optical fiber bare wire and obtaining a scattering intensity pattern of the forward scattering light; a step of finding a difference spectrum between the scattering intensity pattern that is obtained by the hole-less optical fiber bare wire and the scattering intensity pattern that is obtained by the holey optical fiber bare wire; and a step of calculating the hole diameter using a correlation relationship between the difference spectrum and the hole diameter, the predetermined correlation relationship being the correlation between the hole diameter and the width (W) of a central portion of the difference spectrum.

(11) The manufacturing method for a holey optical fiber according to (9) above may further include a step of irradiating the parallel light rays to the optical fiber bare wire from at least two directions.

(12) The manufacturing method for a holey optical fiber according to (9) above may further include a step of measuring a distance between the holey optical fiber bare wire and the detecting portion, and continuously detecting the forward scattering light while adjusting the position of the detecting portion based on a measurement result so that the distance is constant.

(13) A holey optical fiber manufacturing device has a melting furnace that heats a holey optical fiber base material; a hole diameter measuring portion that measures a hole diameter of a holey optical fiber bare wire that is obtained by drawing of the holey optical fiber base material; and a pressure controlling portion that adjusts a pressure in a hole of the optical fiber base material based on a measurement value of the hole diameter; the hole diameter measuring portion has an irradiating device that continuously irradiates parallel light rays from a side of the holey optical fiber bare wire to the holey optical fiber bare wire; a detecting portion that detects a scattering intensity pattern of a forward scattering light that is generated by a irradiation; and a computing portion that calculates and judges the hole diameter of the holey optical fiber bare wire using a correlation relationship between the scattering intensity pattern and the hole diameter; and the pressure controlling portion, based on the hole diameter that is calculated by the computing portion, adjusts the pressure in the hole by controlling a flow rate of a gas that is supplied to the hole of the optical fiber base material.

(14) In the holey optical fiber manufacturing device according to (13) above, the hole diameter measuring portion may have a plurality of the irradiating devices and the detecting portions.

(15) The holey optical fiber manufacturing device according to (13) above may

further include an optical fiber position detector that measures a distance between the detecting portion and the optical fiber bare wire.

Effects of the Invention

In the hole diameter measuring method for a holey optical fiber according to (1) above, parallel light rays are continuously irradiated from a side of the holey optical fiber bare wire, and the hole diameter is calculated based on the light amount of the forward scattering light that is generated by this irradiation. For this reason, it is possible to measure the hole diameter of a holey optical fiber without adding bending or the like to the optical fiber. As a result, there is no risk of causing damage to the optical fiber, and productivity is not adversely affected. Also, in the hole diameter measuring method for a holey optical fiber according to (1) above, the hole diameter is computed using a correlation relationship of a scattering intensity pattern of the forward scattering light and the hole diameter. For that reason, it is possible to accurately measure the hole diameter even in the case of a plurality of holes existing. In particular, in the hole diameter measuring method for a holey optical fiber according to (1) above, it is possible to measure the hole diameter in-line. For that reason, it is possible to reduce variations in the hole diameter, and possible to ensure the optical characteristics over the entire length of the manufactured optical fiber.

Brief Description of the Drawings

FIG. 1 is a schematic configuration drawing of a hole diameter measuring device according to a first example which is not part of the invention.

FIG. 2 is a schematic configuration drawing of a holey optical fiber manufacturing device according to an example which is not part of the invention.

FIG. 3 is a sectional view that shows an example of a holey optical fiber bare wire that is obtained by the holey optical fiber manufacturing device of the same example.

FIG. 4A is a drawing that shows the forward scattering light and the scattering intensity pattern when irradiating parallel light rays on an optical fiber that does not have holes, and shows the appearance of the case in which a mask is not arranged.

FIG. 4B is a drawing that shows the forward scattering light and the scattering intensity pattern when irradiating parallel light rays on an optical fiber that does not have holes, and shows the appearance of the case in which a mask is arranged in the front of the central portion of the detecting portion.

FIG. 5 is a drawing that schematically shows one embodiment of the hole diameter measuring method for a holey optical fiber of the present invention, and is a drawing that shows the forward scattering light and the scattering intensity pattern when irradiating parallel light rays on a holey optical fiber.

FIG. 6 is a drawing that schematically shows the phenomenon of the width W of the central dark portion widening when parallel light rays are irradiated on a holey optical fiber.

FIG. 7A is a cross-sectional drawing of a holey optical fiber base material.

FIG. 7B is a cross-sectional drawing of a holey optical fiber bare wire.

FIG. 8A is a cross-sectional drawing of a holey optical fiber in the case of the hole diameter outside the design range.

FIG. 8B is a cross-sectional drawing of a holey optical fiber in the case of the hole diameter outside the design range.

FIG. 9A is a drawing that shows the scattering intensity pattern that is obtained by irradiating parallel light rays on an optical fiber with comparatively large holes.

FIG. 9B is a drawing that shows the scattering intensity pattern of FIG. 9A and the scattering intensity pattern that is obtained by a hole-less optical fiber.

FIG. 9C is a drawing that shows the difference spectrum of the scattering intensity pattern of FIG. 9A and the scattering intensity pattern that is obtained by a hole-less optical fiber.

FIG. 10 is a schematic configuration drawing of a hole diameter measuring device according to a second example which is not part of the invention.

FIG. 11 is a drawing that shows the principle of the width of the central dark portion changing due to the orientation of the parallel light rays.

FIG. 12 is a schematic configuration drawing of a hole diameter measuring device according to a third example which is not part of the invention.

FIG. 13A is a drawing that shows the forward scattering light and the scattering intensity pattern when irradiating parallel light rays on a holey optical fiber, and is a drawing that shows the appearance in the case of the distance from the optical fiber bare wire to the detecting portion being L1.

FIG. 13B is a drawing that shows the forward scattering light and the scattering intensity pattern when irradiating parallel light rays on a holey optical fiber, and is a drawing that shows the appearance in the case of the distance from the optical fiber bare wire to the detecting portion being L1 + ΔL.

FIG. 14 is a cross-sectional drawing that shows one example of the holey optical fiber.

FIG. 15A is a drawing that shows the scattering intensity pattern of a holey optical fiber (test example 1).

FIG. 15B is a drawing that shows the scattering intensity pattern of a holey optical fiber (test example 2).

FIG. 15C is a drawing that shows the scattering intensity pattern of a holey optical fiber (test example 3).

FIG. 15D is a drawing that shows the scattering intensity pattern of an optical fiber that does not have holes.

FIG. 16 is a graph that shows the relationship between the width of the central dark portion and the hole diameter in test examples 1 to 3.

FIG. 17 is a graph that shows the relationship between the width of the central dark portion and the hole diameter in test examples 4 to 16.

Best Mode for Carrying out the Invention

(First Embodiment)

(Hole diameter measuring device for a holey optical fiber and holey optical fiber manufacturing device)

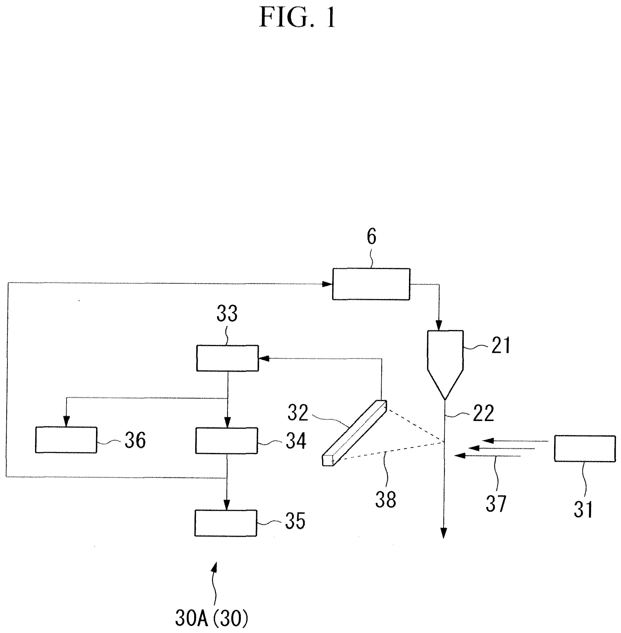

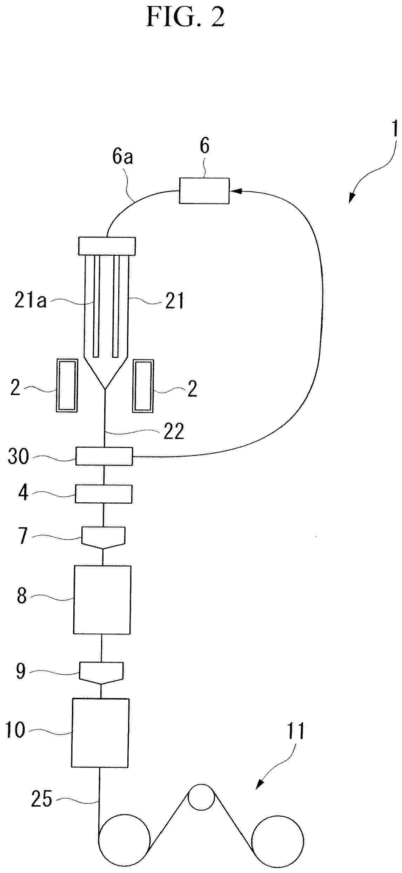

Hereinbelow, a hole diameter measuring device for a holey optical fiber and a holey optical fiber manufacturing device according to the first example, which is not part of the invention, shall be described in detail referring to the drawings. FIG. 1 is a schematic configuration drawing that shows a hole diameter measuring device 30A (30) for a holey optical fiber according to the first example (hereinbelow simply referred to as a hole diameter measuring device). FIG. 2 is a schematic configuration drawing that shows a holey optical fiber manufacturing device 1 according to one example which is not part of the invention (hereinbelow simply referred to as an optical fiber manufacturing device). The optical fiber manufacturing device 1 of the present example is provided with the hole diameter measuring device 30A shown in FIG. 1, and the manufacturing method for a holey optical fiber of the present invention can be implemented.

This optical fiber manufacturing device 1 is provided with a melting furnace 2 that heats and melts an optical fiber base material 21 that has a hole 21; the hole diameter measuring device 30 that computes the hole diameter of a holey optical fiber bare wire 22 that is obtained by drawing of the optical fiber base material 21; an outer diameter measuring portion 4 that measures the outer diameter of the holey optical fiber bare wire 22; a pressure controlling portion 6 that controls the flow rate of gas that is supplied to the hole 21a of the optical fiber base material 21 in accordance with the hole diameter that is calculated; a first covering coating portion 7 that forms a first covering layer on the optical fiber bare wire 22; a first covering hardening portion 8 that hardens the first covering layer; a second covering coating portion 9 that forms a second covering layer on the first covering layer; a second covering hardening portion 10 that hardens the second covering layer; and a wind-up portion 11 that winds up the holey optical fiber 25 on which the first covering layer and the second covering layer are formed.

The hole diameter measuring device 30 continuously irradiates parallel light rays on the holey optical fiber bare wire 22 that has been drawn from the side thereof, and computes the hole diameter from the scattering intensity pattern of forward scattering light generated thereby. Details relating to the hole diameter measuring device 30 shall be given below.

The outer diameter measuring portion 4 has a light source (LED, LD or the like) that irradiates light from the side of the holey optical fiber bare wire 22; and a detector that is installed facing this light source. The detector receives the forward scattering light of the light emitted from the light source to the optical fiber bare wire 22a, and analyzes the pattern or intensity thereof. Thereby, the outer diameter of the optical fiber bare wire 22 is measured. It is preferred for the outer diameter measuring portion 4 to be able to irradiate light from a plurality of directions.

The pressure controlling portion 6 controls the flow rate of gas that is sent to the optical fiber base material 21 by a valve or the like based on the hole diameter computed by the hole diameter measuring device 30. This gas is sent from a supply source not shown through a gas supply path 6a to the optical fiber base material 21. Thereby, the pressure in the hole 21a of the optical fiber base material 21 is adjusted.

Next, the hole diameter measuring device 30 shall be described in detail. As shown in FIG. 1, the hole diameter measuring device 30A (30) of the present embodiment has an irradiation device 31 that irradiates parallel light rays 37; a detecting portion 32 that continuously detects forward scattering light 38 that is produced by the parallel light rays 37 being irradiated onto the holey optical fiber bare wire 22 and converts it to an electrical signal; a signal processing portion 33 that process this electrical signal that was detected; a computing portion 34 that performs computation and judgment of whether a hole of a suitable size is formed; a monitor portion 36 that displays the scattering intensity pattern that is obtained by the signal processing portion 33; and a display portion 35 that displays the hole diameter and hole position that are computed by the computing portion 34.

The irradiation device 31 has a light source (for example, and LED or LD) of the parallel light rays 37, and for example a collimating lens that makes the light rays emitted from the light source parallel light rays. This irradiation device 31 is arranged so that the parallel rays 37 are irradiated from a side of the holey optical fiber bare wire 22 and perpendicular to the direction of travel of the holey optical fiber bare wire 22.

The detecting portion 32 continuously detects the forward scattering light 38 that is produced by the parallel light rays 37 being irradiated onto the holey optical fiber bare wire 22, and converts it to an electrical signal. An example of this detecting portion 32 includes a CCD line sensor and the like. The detecting portion 32 has sufficient width to detect the forward scattering light 38 that is produced when the parallel rays 37 are irradiated onto the holey optical fiber bare wire 22. The detecting portion 32 is arranged in an appropriate position to detect the forward scattering light 38.

In the optical fiber manufacturing device 1 of the present embodiment, it is determined whether or not the hole diameter of the holey optical fiber bare wire 22 is the desired hole diameter by the hole diameter measuring device 30A by the method described below. In the case of the hole diameter differing from the desired value, feedback control of the pressure controlling portion 6 is carried out based on the signal from the computing portion 34, and the pressure in the hole 21a of the optical fiber base material 21 is adjusted. Thereby, in the optical fiber manufacturing device 1 of this embodiment, the holey optical fiber bare wire 22 that has the desired hole diameter is obtained.

(Hole Diameter Measuring Method for a Holey Optical Fiber)

Next, the hole diameter measuring method for a holey optical fiber according to the first embodiment of a present invention (hereinbelow referred to simply as the hole diameter measuring method) shall be described. The hole diameter measuring method of the present embodiment is performed using the hole diameter measuring device 30A of the aforementioned first embodiment.

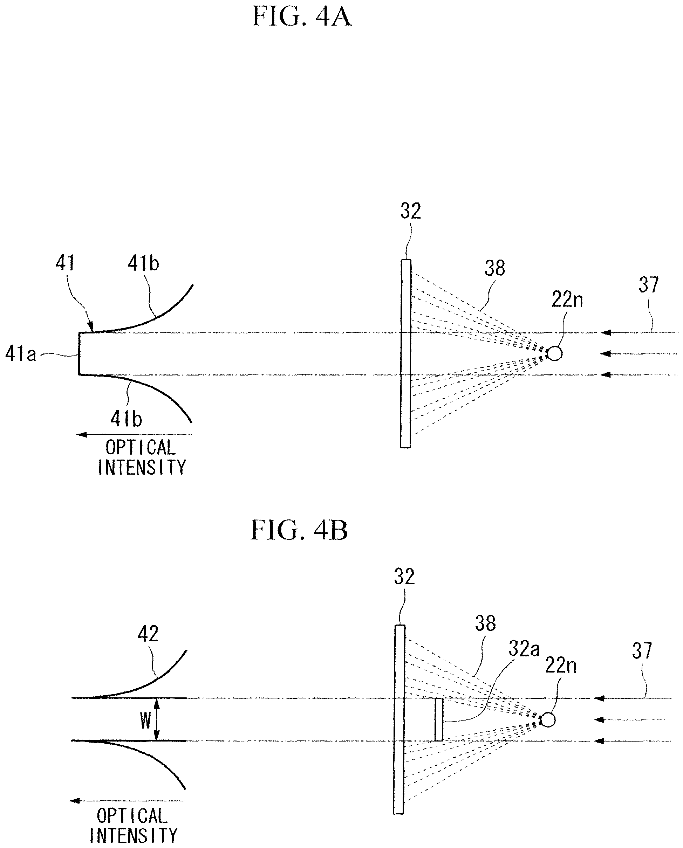

First, the principles of the computation method required for computing the hole diameter from the scattering intensity pattern shall be described with reference to FIG. 4A to FIG. 6.

In the hole diameter measuring method of the present embodiment, it is possible to measure a hole diameter by irradiating parallel light rays 37 on the optical fiber bare wire 22, detecting the forward scattering light 38 that is produced by this irradiation, and analyzing the scattering intensity pattern. First, in order to understand the relationship between the parallel light rays 37 and the scattering intensity pattern, a scattering intensity pattern 41 in the case of irradiating the parallel light rays 37 on an optical fiber bare wire 22n that has no holes shall be described.

FIGS. 4A and 4B are drawings that show the forward scattering light 38 and the scattering intensity patterns 41 and 42 when the parallel light rays 37 have been irradiated on the optical fiber bare wire 22n that has no holes. In the case of having irradiated the parallel light rays 37 on the optical fiber bare wire 22n that has no holes with the device constitution as shown in FIG. 4A from the side of the optical fiber bare wire 22n, and detected the forward scattering light 38, the scattering intensity pattern of the forward scattering light 38 that is obtained has a shape as indicated by reference numeral 41. This scattering intensity pattern 41 consists of a central portion 41a with a high light intensity, and side portions 41b in which the light intensity weakens from the edge portions of the central portion 41a in the direction toward the outer sides of the detecting portion 32. Since the parallel light rays 37 are directly incident on the middle of the detecting portion 32, the light intensity at the central portion 41a of the scattering intensity pattern 41 is high. The side portions 41b of the scattering intensity pattern 41 arise from the forward scattering light 38 that is produced by the parallel light rays 37 passing through the optical fiber bare wire 22n.

Since the parallel light rays 37 are directly incident on the central portion of the detecting portion 32 as described above, there is a risk of the sensor (for example, a CCD line sensor) of the detecting portion 32 charging up. In order to prevent this charge up, a mask 32a that consists of a light shielding board is centrally provided in front portion of the detecting portion 32 as shown in FIG. 4B. By providing this mask 32a, the forward scattering light 38 shows a scattering intensity pattern as shown by reference numeral 42. In the central portion of this scattering intensity pattern 42, a central dark portion is formed that has the same width W as the mask 32a.

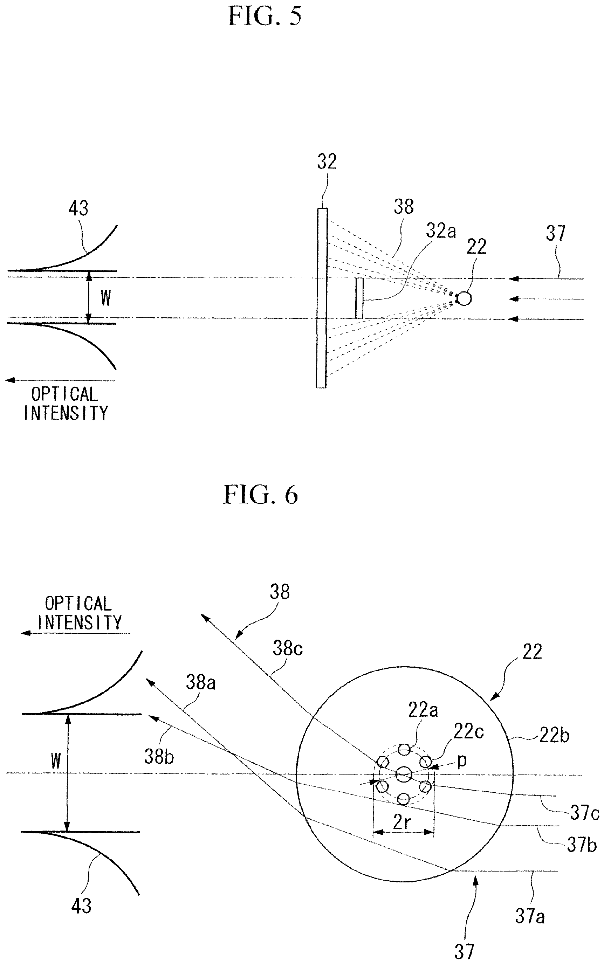

Next, the scattering intensity pattern 43 in the holey optical fiber bare wire 22 shall be described. FIG. 5 is a drawing that shows the forward scattering light 38 and the scattering intensity pattern 43 when the parallel light rays 37 are irradiated on the holey optical fiber bare wire 22.

In the case of the holey optical fiber bare wire 22, the scattering intensity pattern of the forward scattering light 38 that is obtained by the device configuration as shown in FIG. 5 is as indicated by reference numeral 43. In this scattering intensity pattern 43, the width W of the central dark portion is wider compared to the scattering intensity pattern 42 that is obtained from the optical fiber bare wire 22n having no holes. That is, in the case of the optical fiber bare wire 22n that has no holes, the width W of the central dark portion of the scattering intensity pattern 41 is the same as the width of the mask 32a, while in the case of the holey optical fiber bare wire 22, the width W of the central dark portion is wider than the width of the mask 32a.

The phenomenon of the width W of the central dark portion widening when the parallel light rays 37 are being irradiated onto the holey optical fiber bare wire 22 shall be described using FIG. 6.

FIG. 6 is a drawing that schematically shows how, when the parallel light rays 37 are irradiated on the holey optical fiber bare wire 22, the light rays 37a, 37b, 38c that constitute the parallel light rays 37 are refracted and pass through the cross section of the holey optical fiber bare wire 22, and are scattered.

In the case of light rays that do not pass through the region where the hole 22a exists, in the manner of the light ray 37a and light ray 37b, refraction and reflection of the light rays 37a and 37b occur only at an outer diameter boundary 22b of the optical fiber 22, and forward scattering lights 38a and 38b are produced and detected by the detecting portion 32. That is, the light ray 37a and the light ray 37b trace the same path in the case of the optical fiber bare wire 22 that has no holes. The light ray 37b passes through the cladding 24 so as to be tangent with the hole circumcircle 22c that is tangent to the outer side of the plurality of holes 22a (so as to be tangent with the boundary between the holes 22a and the cladding 24). Accordingly, a light rays that is incident to the inside of this light ray 37b (the center side of the optical fiber) passes within the region of the hole circumcircle 22c (passes through the inside of at least one of the holes 22).

As for the light ray 37c that passes through the region where the hole 22a exists (inside of the hole circumcircle 22c), refraction and reflection occur not only at the outer diameter boundary 22b of the optical fiber 22, but also at the boundary between the holes 22a and the cladding 24. For that reason, a forward scattering light 38c that is produced by this light ray 37c becomes light that greatly deviates from the measuring region of the measuring portion 32. As a result, among the forward scattering lights 38 that are detected by the detecting portion 32, the intensity of the forward scattering light 38c that has passed through the inside of the hole 22a becomes extremely small. For this reason, the forward scattering lights that are obtained from the parallel light rays that are irradiated more to the center side of the optical fiber than the light ray 37b are mostly not detected. Note that in the case of the light ray 37c being irradiated on the optical fiber bare wire 22n that has no holes, the forward scattering light thereof is also light that is incident more on the central side of the detecting portion 32 than the light denoted by reference numeral 38b. Accordingly, for these reasons, the width W of the central dark portion of the scattering intensity pattern 43 is wider compared to the width W of the central dark portion of the scattering intensity pattern 42 of the optical fiber bare wire 22n having no holes.

From the above, as the diameter of the hole circumcircle 22c increases, the width W of the central dark portion of the scattering intensity pattern 43 also widens. That is, the width W of the central dark portion has a correlative relationship with the diameter of the hole circumcircle 22c that is the region in which the holes 22a exist (hereinbelow referred to as a hole circumcircle diameter 2r). Here, the width and installation position of the mask 32a need to be set so as not to interfere with the width W of the central dark portion that has widened due to the existence of the holes 22a.

The hole diameter d can be calculated by Equation (1) shown below, with the position p and the hole circumcircle diameter 2r of the hole 22a.

$$d = (2r - p) \qquad\qquad (1)$$

As stated above, the position p of the hole 22a is determined in the stage of forming the holes 21a in the optical fiber base material 21, and is hardly influenced by the drawing conditions. Accordingly, a correlative relationship comes into effect between the hole circumcircle diameter 2r and the width W of central dark portion as mentioned above, that is, it the hole diameter d and the width W of the central dark portion come to have a correlative relationship.

From the above, it is evident that the width W of the central dark portion and the hole diameter d have a correlative relationship.

Accordingly, if the correlative relationship between the width W of the central dark portion and the hole diameter d is found in advance, calculation of the hole diameter d is possible based on the width W of the central dark portion that has been measured.

After the coverings (first covering and second covering) are formed on the optical fiber bare wire 22, it is possible to measure the hole diameter d. However, when the parallel light rays are irradiated after the coverings have been formed, refraction and reflection of the light rays occur at the boundary between of the coverings and the cladding, and the boundary between the first covering and the second covering. That is, effect of the coverings occur at the scattering intensity pattern of the forward scattering light that is obtained. In this case, even for optical fibers in which the cladding outer diameter, the hole position p, and the hole diameter d are the same, if the thickness and material of the coverings differ from each other, it will become impossible to find the hole diameter d using the same correlation equation. Therefore, the need arises to find the correlation equation corresponding to the thickness and material of each covering in advance, which take time and effort. In contrast, in the hole diameter measuring method of the present embodiment, measurement of the hole diameter is performed prior to the coverings (first covering and second covering) being formed on the optical fiber bare wire 22. Accordingly, measurement can be easily performed compared to the case of measuring the hole diameter after the coverings are formed. Moreover, since there is no effect of the coverings on the forward scattering light that is obtained, more accurate measurement of the hole diameter d is possible.

(Manufacturing Method for a Holey Optical Fiber)

Next, a manufacturing method for the holey optical fiber 25 relating to the first embodiment of the present invention shall be described.

First, a correlation equation of the width W of the central dark portion and the hole diameter d is found in a preparatory step of manufacture.

For optical fibers in which the hole position p is the same, the correlative relationship of the hole diameter d and the width W of the central dark portion is also the same for these optical fibers. Therefore, the hole diameter d of a number of the holey optical fiber bare wires 22 in which the hole diameter d is known is measuring using an optical microscope, and in addition the correlation equation with the width W of the central dark portion that has been measured is obtained. By performing the calculation using this correlation equation, it is possible to calculate the hole diameter d with the measurement value of the width W of the central dark portion.

Next, the hole diameter D of the holes 21a that are formed in the optical fiber base material 21 and the hole circumcircle diameter 2R are determined, and the hole processing is performed in the optical fiber base material 21. Hereinbelow, that procedure shall be described.

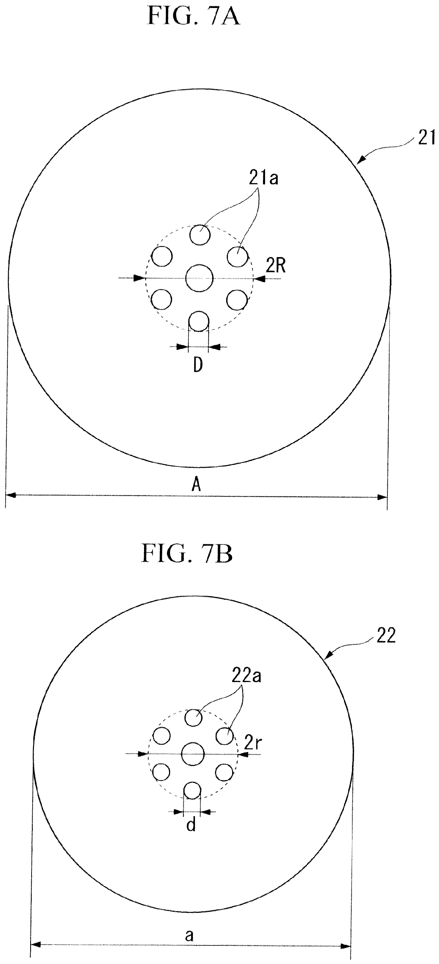

FIG. 7A is a cross-sectional drawing of the holey optical fiber base material 21, and FIG. 7B is a cross-sectional drawing of the holey optical fiber bare wire 22.

In the case of manufacturing the holey optical fiber bare wire 22 by drawing the holey optical fiber base material 21, assuming the application of pressure to the holes 21a of the optical fiber base material 21 and the draw speed of the optical fiber base material 21 are appropriate, and letting the diameter of the optical fiber base material 21 be A, the hole diameter of the optical fiber base material 21 be D, the diameter of the optical fiber bare wire 22 after drawing be a, and the hole diameter be d, the relationship of the following Equation (2) is maintained.

$$A : D = a : d \qquad (2)$$

Similarly, letting the diameter of the optical fiber base material 21 be A, the hole circumcircle diameter of the optical fiber base material 21 be 2R, the diameter of the optical fiber bare wire 22 after drawing be a, and the hole circumcircle diameter be 2r, the relationship of the following Equation (3) is maintained.

$$A : 2R = a : 2r \qquad (3)$$

Therefore, in the manufacture of the holey optical fiber bare wire 22, when the desired hole diameter is determined to be d, and the desired hole circumcircle diameter is determined to be 2r, it is possible to find the hole diameter D of the holey optical fiber base material 21 and the hole circumcircle diameter 2R with Equations (4) and (5), respectively.

$$D = d \times A \div a \qquad (4)$$

$$2R = 2r \times A \div a \qquad (5)$$

Using the hole diameter D and the hole circumcircle diameter 2R that are found by the aforementioned Equations (4) and (5), holes are opened in the optical fiber perform, and the holey optical fiber base material 21 is obtained.

Next, while pressurizing the holes 21a of the holey optical fiber base material 21, this holey optical fiber base material 21 is drawn. Thereby, the holey optical fiber bare wire 22 is fabricated.

When drawing the holey optical fiber base material 21, if the pressurization pressure during the drawing is suitable, the hole diameter and hole circumcircle diameter of the holey optical fiber bare wire 22 that is fabricated has the hole diameter d and the hole circumcircle diameter 2r has designed. However, if the pressurization pressure is not suitable, the hole diameter d within the design range is not obtained. Also, due to the fluctuation in the pressurization pressure over time and the fluctuation in the drawing temperature, the hole diameter d is not stable in the lengthwise direction of the optical fiber.

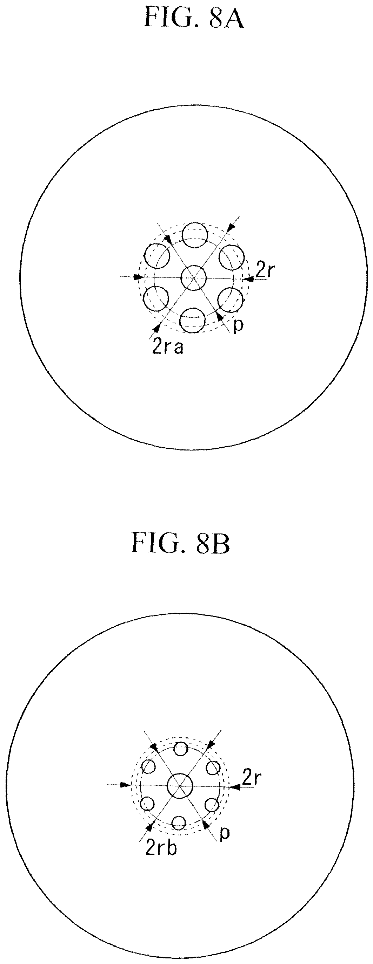

FIGS. 8A and 8B are cross-sectional views of the holey optical fiber bare wire 22 in the case of the hole diameter d being outside the design range. As shown in FIG. 8A, in the case of the hole diameter d being manufactured larger than the desired diameter, the hole circumcircle diameter 2ra is also larger than the designed hole circumcircle diameter 2r. In this case, in regard to the intensity peak of the forward scattering light that is obtained by the irradiation of the parallel light rays, the width W of the central dark portion thereof becomes wider than the predetermined value. Conversely, as shown in FIG. 8B, in the case of the hole diameter d being fabricated small, the hole circumcircle diameter 2rb becomes smaller than the designed hole circumcircle diameter 2r. In this case, at the intensity peak of the forward scattering light that is obtained by irradiation of the parallel light rays, the width W of the central dark portion thereof becomes narrower than the predetermined value.

As mentioned above, regardless of the flow rate of gas that is supplied to the base material hole 21a of the holey optical fiber base material 21, the hole position p of the holey optical fiber bare wire 22 after drawing is the same. From this, in the case of the hole circumcircle diameter 2r of the holey optical fiber 22 shifting from the desired value, the hole diameter d indicates that it has not become the desired value, and if the hole circumcircle diameter 2r of the holey optical fiber 22 has become the desired value, the hole diameter d also indicates that it has become the desired value.

In the holey optical fiber manufacturing device 1 of this embodiment, computation of the hole diameter d based on the correlation equation that was found above from the width W of the central dark portion of the obtained scattering intensity pattern is performed by the computing portion 34 at any time. When the hole diameter d shifts from the desired value as described above, the computing portion 34 performs feedback control of the pressure controlling portion 6 to control the flow rate of gas that is sent to the optical fiber base material 21. Accordingly, in the holey optical fiber bare wire 22 obtained by drawing of the optical fiber base material 21, the holey optical fiber bare wire 22 is obtained in which the hole diameter d is stable over the lengthwise direction of the optical fiber without the hole diameter d departing from the allowable range of the designed value.

In the aforementioned method, the hole diameter d was calculated from the width W of the central dark portion, and the pressure control was performed based on the calculated hole diameter d. However, if the desired hole circumcircle diameter 2r is known from the outset, it is possible to compute the width W of the central dark portion of an appropriate scattering intensity pattern from this hole circumcircle diameter 2r. Therefore, it is possible to perform pressure control so that the width W of the central dark portion directly becomes the width W of an appropriate central dark portion without calculating the hole diameter d.

Next, the outer diameter of the holey optical fiber bare wire 22 that has the appropriate hole diameter d is measured by the outer diameter measuring portion 4. Here, it is also possible to control the drawing speed and the like according to the outer diameter of the holey optical fiber bare wire 22 that was measured.

Subsequently, a first covering layer and a second covering layer are administered to the holey optical fiber bare wire 22 by the first covering coating portion 7 and the first covering hardening portion 8, and the second covering coating portion 9 and the second covering hardening portion 10, respectively. Thereby, the holey optical fiber 25 is obtained. The holey optical fiber 25 is rolled up by a rolling-up portion.

(Second Embodiment)

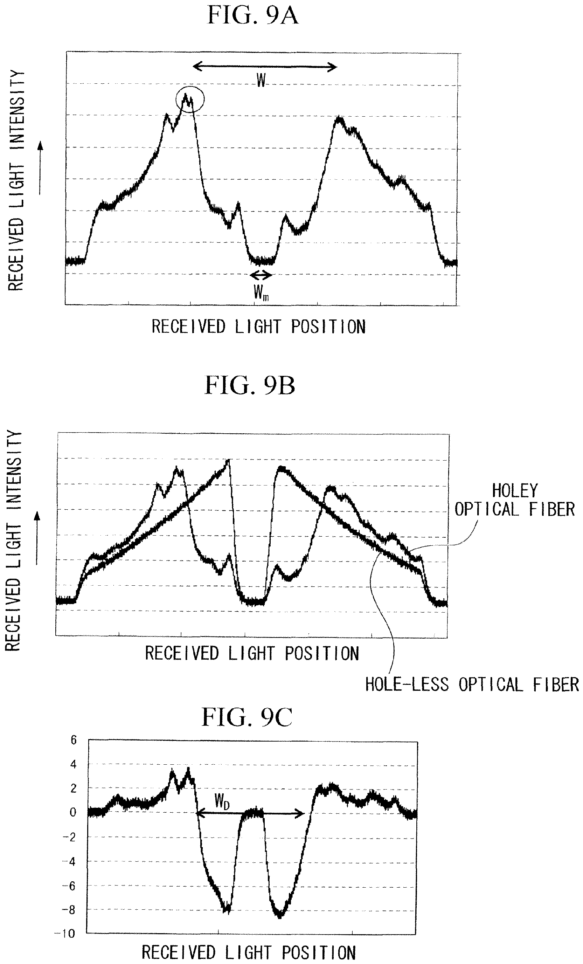

FIG. 9C is a drawing that shows an example of a scattering intensity pattern that is obtained by the hole diameter measuring method of a holey optical fiber according to the second embodiment of the present invention.

The hole diameter measuring method of the present embodiment differs from the hole diameter measuring method of the first embodiment on the point of finding the width W of the central dark portion using the difference spectrum of the scattering intensity pattern that is obtained with a holey optical fiber and the scattering intensity pattern that is obtained with an optical fiber having no holes.

Note that when manufacturing a holey optical fiber, it is the same as that of the above-mentioned first embodiment besides finding the width W of the central dark portion using a difference spectrum. At this time, in the computing portion 34 in the hole diameter measuring device 30, it is programmed so that the width W of central dark portion is found using the difference spectrum. The other constitutions of the hole diameter measuring device 30 and the holey optical fiber manufacturing device are the same as the first example.

In a holey optical fiber, for example, when there are many holes formed, or when the diameter of the holes is comparatively large, judging the intensity peaks of forward scattering light may be difficult. This is due to the following reason. When there are many holes, or when the diameter of a hole is comparatively large, the length of the periphery of the entire hole becomes long, and the boundary portion of air and silica glass increases. When parallel rays are irradiated to such a holey optical fiber, interference easily occurs in the forward scattering light that is obtained because the boundary portion between the air and silica glass has increased. Due to this interference, judging of the intensity peak of the forward scattering light becomes difficult.

FIG. 9A shows the scattering intensity pattern that is obtained by irradiating parallel light rays on a holey optical fiber with comparatively large holes (the diameter of a hole being 7.4 $\mu$m and the number of holes being eight). As shown by the circled area in FIG. 9A, due to the effect of the interference, judgment of the intensity peak of the forward scattering light becomes difficult.

In the hole diameter measuring method of the present embodiment, first the scattering intensity pattern of the forward scattering light of a hole-less optical fiber in which holes are not imparted beforehand is obtained. Subsequently, the scattering intensity pattern of the forward scattering light of a holey optical fiber is obtained. The scattering intensity pattern of the forward scattering light of the hole-less optical fiber and the scattering intensity pattern of the forward scattering light of the holey optical fiber are shown in FIG. 9B. Subsequently, the difference spectrum of these scattering intensity patterns is found (refer to FIG. 9C). The width W of the central dark portion is the horizontal distance $W_D$ at which the value of the difference spectrum becomes zero. By finding the width W of the central dark portion ($W_D$) from the difference spectrum in the manner, even for a holey optical fiber in which a scattering intensity pattern of the forward scattering light as shown in FIG. 9A is obtained, as shown in FIG. 9C, the width W of central dark portion is clearly found, and the measurement error decreases. Moreover, compared with the first embodiment, even for a holey optical fiber with more holes, and a holey optical fiber in which the hole diameter is large, measurement of the hole diameter becomes possible.

The scattering intensity pattern of the forward scattering light of a hole-less optical fiber is measurable with the hole diameter measuring device 30A of the first embodiment. Immediately after the start of spinning of a holey optical fiber, an optical fiber bare wire is produced in the state of the hole being blocked. If a scattering intensity pattern of forward scattering light is obtained by irradiating parallel light rays on the optical fiber bare wire in the state of the hole being blocked, the hole diameter measuring method of the present embodiment can be performed with the same manufacturing process, manufacturing apparatus, and conditions of manufacture as a holey optical fiber.

(Third Embodiment)

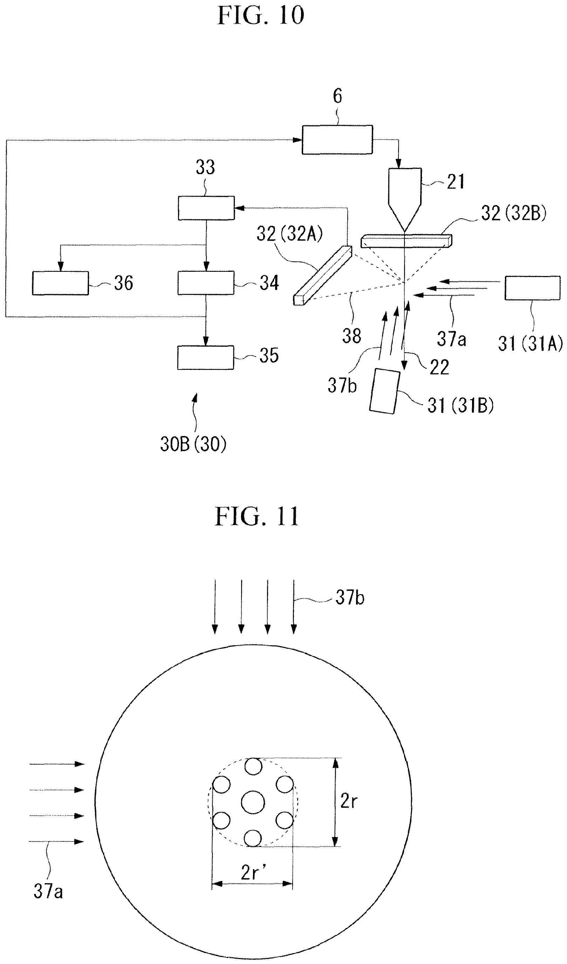

FIG. 10 is a drawing that schematically shows a hole diameter measuring device 30B (30) that is used for performing the hole diameter measurement method of the third embodiment of the present invention. The hole diameter measuring device 30B of the present example, which is not part of the invention, differs from the first example on the point of a plurality of irradiating devices 31 (31A, 31B) and detecting portions 32 (32A and 32B) being provided. These detecting portions 32A and 32B are connected to the same signal processing portion 33. The drawing shows the case of two of the irradiating devices 31 and the detecting portions 32 being provided, respectively, but they are not particularly limited to this number.

In the hole diameter measuring method of the aforementioned first embodiment (the hole diameter measuring device 30A), the width W of the central dark portion of the scattering intensity pattern 43 may end up changing due to the direction in which the parallel light rays 37 are irradiated. FIG. 11 is a drawing that shows the principle of the width W of the central dark portion changing due to the orientation of the parallel light rays. In the case of the parallel light rays 37a being irradiated from the left side of FIG. 11, the hole circumcircle diameter that is calculated is 2r. On the other hand, in the case of the parallel light rays 37b being irradiated from the upper side of FIG. 11, the hole circumcircle diameter that is calculated is 2r', which is less than 2r. In this way, an error in the value of the hole diameter d that is obtained occurs in the irradiation of parallel light rays from one direction. This error becomes prominent as the hole diameter increases and the number of holes is decreases.

In contrast to this, in the hole diameter measuring method of the present embodiment, as shown in FIG. 11, by irradiating the parallel light rays 37a and 37b on the optical fiber bare wire from at least two irradiating devices 31A and 31B that are provided, a plurality of scattering intensity patterns are obtained. The hole diameter d is calculated using the maximum width W of the central dark portion of these scattering intensity patterns. Thereby, it is possible to reduce the error of the hole diameter d that is obtained, and so more accurate measurement of the hole diameter d becomes possible. Based on the hole diameter d that is calculated by the hole diameter measuring method of the present embodiment, if a holey optical fiber is produced while controlling the pressure of the gas that is supplied to the hole 21a of the optical fiber base material 21, the holey optical fiber bare wire 22 is obtained in which the hole diameter d is more stable over the lengthwise direction of a optical fiber. In this case, the holey optical fiber manufacturing device is the same as the holey optical fiber manufacturing device 1 shown in the aforementioned first embodiment, except for the configuration of the hole diameter measuring device shown in FIG. 10.

In the hole diameter measuring method and the hole diameter measuring device 30B of the present embodiment, the case was shown of obtaining a scattering intensity pattern by irradiating the parallel light rays 37a and 37b from two directions. However, even in the case of irradiating the parallel light rays 37 from one direction, an appropriate width W of the central dark portion is obtained similarly to the present embodiment by adding a rotation movement of at least 90 degrees to the optical fiber bare wire 22 itself.

Even in the present embodiment, the width W of the central dark portion may be determined by finding the difference spectrum between the scattering intensity pattern of the forward scattering light that is obtained with a holey optical fiber and the scattering intensity pattern of the forward scattering light that is obtained with a hole-less optical fiber, similarly to the afore-described second embodiment. Similarly to the above-mentioned case, measurement of the hole diameter becomes possible even for a holey optical fiber that has many holes and a holey optical fiber with a large hole diameter.

(Fourth Embodiment)

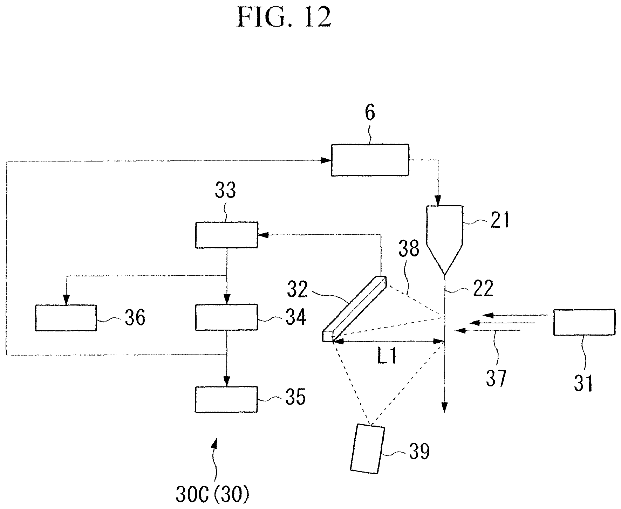

FIG. 12 is a drawing that schematically shows a hole diameter measuring device 30C (30) that is used for performing the hole diameter measurement method of the fourth embodiment of the present invention. The hole diameter measuring device 30C of the present embodiment differs from the first embodiment on the point of an optical fiber position detector 39 that measures the distance from the detecting portion 32 to the optical fiber bare wire 22 being further provided.

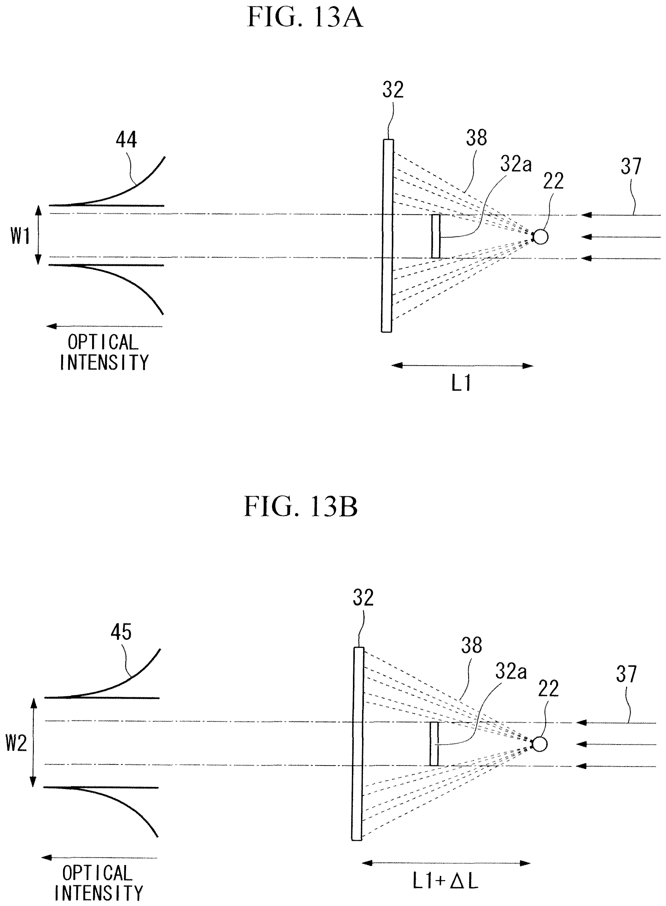

The width W of the central dark portion of the scattering intensity pattern changes in accordance with the relative positions of the optical fiber bare wire 22 and the detecting element 32 even for holey optical fibers that have the same hole circumcircle diameter. Causes of a change in the relative position of the optical fiber bare wire 22 and the detecting element 32 include for example changes of the pass line of the optical fiber during spinning and in each spinning operation. As shown in FIG. 13A, in the case of arranging the detecting portion 32 at the position of the distance L1 from the holey optical fiber bare wire 22, the width of the central dark portion of the scattering intensity pattern 44 that is obtained is W1. As shown in FIG. 13B, in the case of arranging the detecting portion 32 at a position that is separated from the holey optical fiber bare wire 22 by an additional ΔL from the position shown in FIG. 13A, the width W2 of the central dark portion of the scattering intensity pattern 45 that is obtained becomes a larger value than the width W1 of the central dark portion that is obtained in the case of FIG. 13A. In this way, since the width W of the central dark portion of the scattering intensity pattern changes in accordance with the distance from the detecting portion 32 to the optical fiber bare wire 22, this becomes a factor of measurement error.

In the hole diameter measuring method of the present embodiment, the position of the optical fiber bare wire 22 is always detected by providing the optical fiber position detector 39 in a perpendicular direction with the detecting portion 32 as shown in FIG. 12. In the case of the position of the optical fiber bare wire 22 changing, the position of the detecting portion 32 is finely adjusted so that the relative position of the optical fiber bare wire 22 and the detecting portion 32 is suitably (constantly) maintained. When doing so, the hole diameter measuring device 30C is preferably further provided with a moving mechanism (not shown in FIG. 12) that moves the position of the detecting portion 32 in accordance with a signal from the optical fiber position detector 39.

In this way, according to the hole diameter measuring method of the present embodiment, hole diameter measurement can be performed in the state of the positions of the optical fiber bare wire 22 and the detecting portion 32 being constantly maintained. For this reason, it is possible to calculate the hole diameter d from the width W of the central dark portion of the scattering intensity pattern with greater accuracy and free of error. If a holey optical fiber is manufactured while controlling the pressure of the gas that is supplied to the hole 21a of the optical fiber base material 21 based on the hole diameter d that is calculated by the hole diameter measuring method of the present embodiment, the holey optical fiber 25 is obtained in which the hole diameter d is more stable along the lengthwise direction of the optical fiber. In this case, the holey optical fiber manufacturing device is the same as the holey optical fiber manufacturing device 1 shown in the aforementioned first embodiment, except for the hole diameter measuring device 30 being the constitution shown in FIG. 12.

Changes in the relative position of the optical fiber bare wire 22 and the detecting portion 32 also occur due to differences between manufacturing devices of holey optical fibers. In this case, the detecting portion 32 should be arranged so that the relative position of the optical fiber bare wire 22 and the detecting portion 32 becomes an appropriate position.

The optical fiber position detector 39 is not particularly limited provided it is capable of always detecting the distance between the optical fiber bare wire 22 and the detecting portion 32. In the event of the position from the optical fiber bare wire 22 to the detecting portion 32 having changed, this optical fiber position detector 39 preferably can transmit a signal in accordance with this change amount to the aforementioned moving mechanism.

Even in the present embodiment, the width W of the central dark portion may be determined by finding the difference spectrum between the scattering intensity pattern of the forward scattering light that is obtained with a holey optical fiber and the scattering intensity pattern of the forward scattering light that is obtained with a hole-less optical fiber in the same manner as the afore-described second embodiment. Similarly to the above-mentioned case, measurement of the hole diameter becomes possible even for a holey optical fiber that has many holes and a holey optical fiber with a large hole diameter.

Also, the width W of the central dark portion may be measured from a plurality of directions of the optical fiber bare wire 22 by a plurality of irradiating devices 31 (31A, 31B) and detecting portions 32 (32A and 32B) which are provided in the hole diameter measuring device 30C, similarly to the afore-described third embodiment. Similarly to the aforementioned case, it is possible to obtain an appropriate width W of the central dark portion, and measurement of the hole diameter can be performed with good accuracy. In this case, it is possible to impart the functions of the irradiating device 31 and the optical fiber position detector 39 to the same device. In this case, a reduction in size of the hole diameter measuring device is achieved.

Examples

(Test Examples 1 to 3)

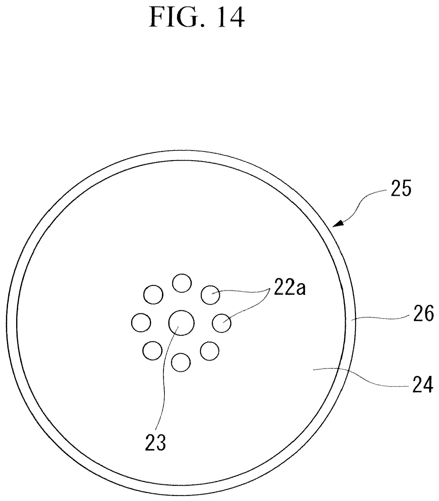

The holey optical fiber 25 shown in FIG. 14 was manufactured using the hole diameter measuring method according to the third embodiment of the present invention, the hole diameter measuring device 30B shown in FIG. 10 that is used in this measuring method, and the optical fiber manufacturing device 1 that has this hole diameter measuring device 30B.

The holey optical fiber 25 has eight holes 22a that are arranged at regular intervals along the circumferential direction in the cladding 24 that is near the core glass layer 23. These holes 22a are formed along the lengthwise direction of the optical fiber 25. The hole diameters d of these eight holes are all the same. A covering layer 26 that consists of a first covering layer and a second covering layer are disposed around the cladding 24.

Two LEDs are provided as irradiating devices 31 in the hole diameter measuring device 30B. These irradiating devices 31 (31A and 31B) are arranged so that the parallel light rays 37 that are irradiated from the respective LEDs are perpendicular. CCD line sensors are respectively provided as the detecting portions 32 (32A and 32B) at positions sandwiching the optical fiber bare wire 22 and facing each irradiating device 31 (31A and 31B). A mask 32a that is set in advance so as not to interfere with the hole existence region is installed directly before the middle of the detecting portion 32.

In the signal processing portion 33, a setting is made so as to adopt the larger value of the widths W of the central dark portions of the two scattering intensity patterns 43 that are obtained by the two detecting portions 32A and 32B as the width of the central dark portion. Then, this value is used in the computing process of the hole circumcircle diameter 2r and/or the hole diameter d.

The outer diameter of the optical fiber bare wire 22 is set to 125.0 $\mu$m, The hole position p is set to 19.5 $\mu$m.

In the present test example, measurement was carried out on three types of samples (test examples 1 to 3) in which the hole diameter d differs. Also, measurement was conducted on an optical fiber bare wire in which holes 22a are not formed.

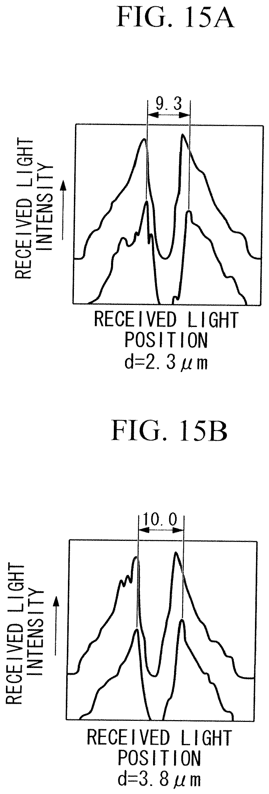

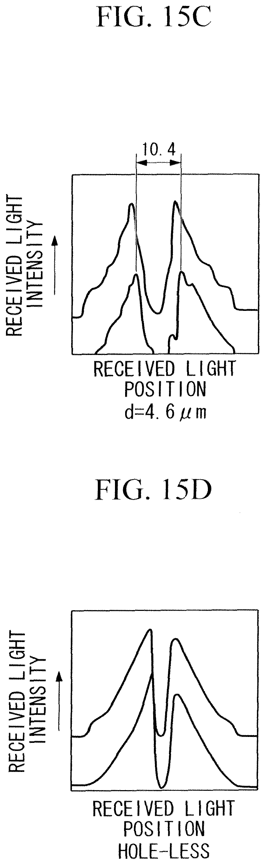

FIGS. 15A to 15C show the values of three types of hole diameters d measured by an optical microscope and the waveforms of the scattering intensity patterns that are obtained by the CCD line sensor. Also, FIG. 15D shows the scattering intensity pattern that is obtained by the optical fiber bare wire in which the holes 22a are not formed. Also, Table 1 shows a summary of the results.

[Table 1]

|  | Width of Central Dark Portion | Hole Diameter Obtained by Microscopic Observation ($\mu$m) |
|---|---|---|
| Test Example 1 | 9.3 | 2.3 |
| Test Example 2 | 10.0 | 3.8 |
| Test Example 3 | 10.4 | 4.6 |

The width W of the central dark portion shown in FIGS. 15A to 15C is the distance between the two maximum peaks of each scattering intensity pattern. The width W of the central dark portion of the holey optical fiber bare wire 22 differs by the hole diameter d. The larger the hole diameter d, the wider the width W of the central dark portion. A central dark portion is formed in the scattering intensity pattern of the optical fiber bare wire in which the hole 22a is not formed by the mask 32a that is installed directly before the middle of the detecting portion 32. The width W of this central dark portion is small compared to the width W of this central dark portion that is formed by the holey optical fiber bare wire 22. Also, from the data shown in FIG. 15D, it is confirmed that interference is not produced by the mask 32a in the region where the holes 22a exist.

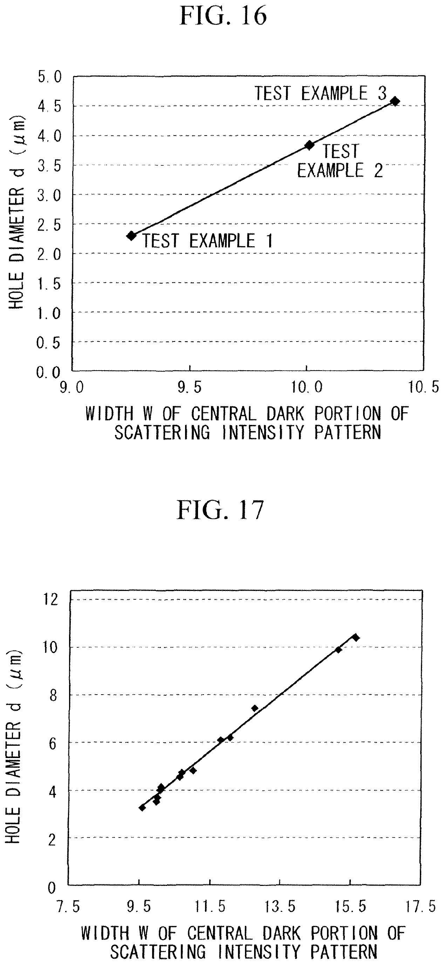

FIG. 16 is a graph that shows the relationship between the width W of this central dark portion in the test examples 1 to 3 (x-axis) and the hole diameter d (y-axis).

As shown in FIG. 16, a linear correlation is seen between the hole diameter d of the holey optical fiber 22, and the width W of the central dark portion. An approximation formula acquired from the width W of the central dark portion of a scattering intensity pattern (x-axis) and the actual measurement of the hole diameter d (y-axis) is roughly y = 2.08x - 16.9, and the regression coefficient ($R^2$) was approximately 1.

The above result showed that a correlation relationship was seen between the width W of the central dark portion obtained from the scattering intensity pattern of the forward scattering light 38 and the actual hole diameter d, for the same hole position p. From this, it was confirmed that the hole diameter d was computable by measuring the width W of the central dark portion of the forward scattering light 38.

The holey optical fibers of the test examples 4 to 16 with different hole diameters were manufactured with the same device as the test examples 1 to 3. The test examples 4 to 16 are the same as the test examples 1 to 3 except for having a larger hole diameter than the test examples 1 to 3. In these test examples 4 to 16, the width W of the central dark portion was found using the difference spectrum between the scattering intensity pattern of the forward scattering light of a holey optical fiber and the scattering intensity pattern of the forward scattering light of a hole-less optical fiber, as shown in the aforementioned second embodiment.

FIG. 17 shows the relationship of the width W of the central dark portion that is obtained in the test examples 4 to 16 (x-axis) and the actual measurement of the hole diameter d (y-axis).

As shown in FIG. 17, a linear correlation is seen between the hole diameter d of the holey optical fiber 22, and the width W of the central dark portion. An approximation formula acquired from the width W of the central dark portion that is found from the difference spectrum (x-axis) and the actual measurement of the hole diameter d (y-axis) is roughly $y = 1.20x - 8.12$, and the regression coefficient ($R^2$) was approximately 1. Also, while in the test examples 1 to 3 the measurement of the width W of the central dark portion was about 10.3, in the test examples 4 to 16 that adopted the measurement method of the aforementioned second embodiment, the width W of the central dark portion could be measured until around 15.5.

The above result showed that a correlation relationship was seen between the width W of the central dark portion obtained from the difference spectrum of the scattering intensity pattern of the forward scattering light 38 and the actual hole diameter d, for the same hole position p. From this, it could be confirmed that the hole diameter d can be computed by measuring the width W of the central dark portion of the forward scattering light 38 using the difference spectrum. Moreover, it could be confirmed that the hole diameter can be accurately measured by adopting the hole diameter measuring method of the aforementioned second embodiment even for a holey optical fiber with a large hole diameter or many holes.

(Example)

The holey optical fiber 25 shown in FIG. 14 was manufactured with the same conditions and same device as the test examples 1 to 3. In doing so, feedback control is performed by the pressure controlling portion 6 on the flow rate of the gas that is supplied to the hole 21a of the optical fiber base material 21 based on the width W of the central dark portion of the scattering intensity pattern that is obtained by the hole diameter measuring device 30B, and drawing of the holey optical fiber base material was performed. The hole diameter d and the bending loss of the obtained holey optical fiber 22 was measured. The measurement results are shown in Table 2. The sample number was 22, and the average values and the like are shown as measurement results.

The bending loss was measured by the method in accordance with IEC60793-1-47. The measurement wavelength was 1550 nm, and the bending diameter was 10 mm.

(Comparative Example)

The holey optical fiber 25 was manufactured similarly to the embodiment, except for not performing calculation of the hole diameter (measurement) and feedback control of the gas flow rate by the pressure controlling portion 6 based on this measurement in-line. Also, the hole diameter d and the bending loss were measured in the same manner as the embodiment. The results are shown in Table 2. The sample number of the comparative example was 22, and the average values and the like are shown as measurement results.

[Table 2]

| | Example | | Comparative Example | |
|---|---|---|---|---|
| | Hole Diameter ($\mu$m) | Bending Loss (dB/Turn) | Hole Diameter ($\mu$m) | Bending Loss (dB/Turn) |
| Average Value | 4.9 | 0.05 | 4.8 | 0.18 |
| Maximum Value | 5.1 | 0.08 | 6.2 | 0.62 |
| Minimum Value | 4.7 | 0.03 | 3.8 | 0.02 |
| Standard Deviation | 0.1 | 0.02 | 0.7 | 0.17 |

From Table 2, the hole of the optical fiber that is obtained in the example has a stable hole diameter over the entire length. For that reason, it is evident that an optical fiber with low bending loss is obtained.

Industrial Applicability

According to the holey optical fiber measuring method of the present invention, it is possible to measure the hole diameter of a holey optical fiber without adding bending or the like to the optical fiber. As a result, there is no risk of causing damage to the optical fiber, and productivity is not adversely affected. Also, the hole diameter is computed using the correlation relationship between the scattering intensity pattern of the forward scattering light and the hole diameter. For that reason, even in the case of a plurality of holes existing, it is possible to accurately measure the hole diameter. In particular, since the hole diameter can be measured in-line, it is possible to reduce variations in the hole diameter in the lengthwise direction of an optical fiber, and possible to ensure the optical characteristics of the manufactured optical fiber over the entire length thereof.

Description of Reference Numerals and Signs

| 1 | holey optical fiber manufacturing device |
| 2 | melting furnace |
| 4 | outer diameter measuring portion |
| 6 | pressure controlling portion |
| 21 | optical fiber base material |
| 21a | hole of optical fiber base material |
| 22 | holey optical fiber bare wire |
| 22a | hole |
| 30 (30A, 30B, 30C) | hole diameter measuring device |
| 31 (31A, 31B) | irradiation device |
| 32 (32A, 32B) | detecting portion |
| 32a | mask |
| 33 | signal processing portion |
| 34 | computing portion |
| 37 | parallel light rays |
| 38 | forward scattering light |
| 39 | optical fiber position detector |
| 43, 44, 45 | scattering intensity pattern |

**Claims**

1. A hole diameter (d) measuring method for a holey optical fiber that, when manufacturing a holey optical fiber bare wire (22) by heating and melting a holey optical fiber base material (21) which has a plurality of holes (22a) that extend and are arranged along a longitudinal direction of the holey optical fiber base material (21) and drawing it, measures a diameter (d) of a hole (22a) of the optical fiber bare wire (22), the method comprising:

   a step of continuously irradiating parallel light rays (37) from a side of the holey optical fiber bare wire (22) that is obtained by the drawing to the holey optical fiber bare wire (22);
   a step of continuously detecting with a detecting portion (32; 32A; 32B) a forward scattering light (38) that is generated by an irradiation of the parallel light rays (37);
   a step of generating a forward scattering light (38) by irradiating the parallel light rays (37) from a side of a hole-less optical fiber bare wire to the hole-less optical fiber bare wire and obtaining a scattering intensity pattern (42) of the forward scattering light (38);
   a step of generating a forward scattering light (38) by irradiating the parallel light rays (37) from a side of the holey optical fiber bare wire (22) to the holey optical fiber bare wire (22) and obtaining a scattering intensity pattern (43, 44, 45) of the forward scattering light (38);
   a step of calculating a difference spectrum between the scattering intensity pattern (42) that is obtained by the hole-less optical fiber bare wire and the scattering intensity pattern (43, 44, 45) that is obtained by the holey optical fiber bare wire (22); and
   a step of calculating the hole diameter (d) from the difference spectrum using a predetermined correlation relationship between a difference spectrum and a hole diameter, the predetermined correlation relationship being the correlation between the hole diameter and the width (W) of a central portion of the difference spectrum.

2. The hole diameter (d) measuring method for a holey optical fiber according to claim 1, wherein the parallel light rays (37) are irradiated to a holey optical fiber bare wire on which a covering is not formed.

3. The hole diameter (d) measuring method for a holey optical fiber according to claim 1, wherein the parallel light rays (37) are irradiated to the optical fiber bare wire (22) from at least two directions.

4. The hole diameter (d) measuring method for a holey optical fiber (22) according to claim 1, wherein

a distance between the holey optical fiber bare wire (22) and the detecting portion (32; 32A; 32B) is measured, and the forward scattering light (38) is continuously detected while adjusting a position of the detecting portion (32; 32A; 32B) based on a measurement result so that the distance is constant.

5. A manufacturing method for a holey optical fiber that manufactures a holey optical fiber bare wire (22) by heating and melting a holey optical fiber base material (21) which has a plurality of holes (22a) that extend and are arranged along a longitudinal direction of the holey optical fiber base material (21) and drawing it, the method comprising:

a step of continuously irradiating parallel light rays (37) from a side of the holey optical fiber bare wire (22) to the holey optical fiber bare wire (22);

a step of continuously detecting with a detecting portion (32; 32A; 32B) a forward scattering light (38) that is generated by an irradiation of the parallel light rays (37);

a step of generating a forward scattering light (38) by irradiating the parallel light rays (37) from a side of a hole-less optical fiber bare wire to the hole-less optical fiber bare wire and obtaining a scattering intensity pattern (42) of the forward scattering light (38);

a step of generating a forward scattering light (38) by irradiating the parallel light rays (37) from a side of the holey optical fiber bare wire (22) to the holey optical fiber bare wire (22) and obtaining a scattering intensity pattern (43, 44, 45) of the forward scattering light (38);

a step of calculating a difference spectrum between the scattering intensity pattern (42) that is obtained by the hole-less optical fiber bare wire and the scattering intensity pattern (43, 44, 45) that is obtained by the holey optical fiber bare wire (22);

a step of calculating the hole diameter (d) from the difference spectrum using a predetermined correlation relationship between a difference spectrum and a hole diameter, the predetermined correlation relationship being the correlation between the hole diameter and the width (W) of a central portion of the difference spectrum; and

a step of adjusting a pressure in a hole by controlling a flow rate of a gas that is supplied to the hole of the holey optical fiber base material (21) in accordance with the calculated hole diameter (d).

6. The manufacturing method for a holey optical fiber according to claim 5, further comprising:
a step of irradiating the parallel light rays (37) to the optical fiber bare wire (22) from at least two directions.

7. The manufacturing method for a holey optical fiber according to claim 5, further comprising:
a step of measuring a distance between the holey optical fiber bare wire (22) and the detecting portion (32; 32A; 32B), and continuously detecting the forward scattering light (38) while adjusting the position of the detecting portion (32; 32A; 32B) based on a measurement result so that the distance is constant.

**Patentansprüche**

1. Verfahren zum Messen von Lochdurchmessern (d) in einer löchrigen Glasfaser, das beim Herstellen eines Blankdrahts (22) aus löchriger Glasfaser durch Erwärmen und Schmelzen eines Basismaterials (21) einer löchrigen Glasfaser, das mehrere Löcher (22a) aufweist, die sich entlang einer Längsrichtung des Basismaterials (21) der löchrigen Faser erstrecken und an dieser angeordnet sind, und durch Ziehen desselben, einen Durchmesser (d) eines Loches (22a) des Glasfaser-Blankdrahtes (22) misst, wobei das Verfahren aufweist:

einen Schritt des fortlaufenden Ausstrahlens paralleler Lichtstrahlen (37) von einer Seite des Blankdrahtes (22) aus löchriger Glasfaser, der durch das Ziehen zum Blankdraht (22) aus löchriger Glasfaser erhalten wird;

einen Schritt des fortlaufenden Erfassens eines Vorwärtsstreulichts (38), das durch ein Ausstrahlen der parallelen Lichtstrahlen (37) erzeugt wird, mit einem Erfassungsabschnitt (32; 32A; 32B);

einen Schritt des Erzeugens von Vorwärtsstreulicht (38) durch Ausstrahlen der parallelen Lichtstrahlen (37) von einer Seite eines Blankdrahtes aus lochloser Glasfaser zu dem Blankdraht aus lochloser Glasfaser und Erhalten eines Streuintensitätsmusters (42) des Vorwärtsstreulichts (38);

einen Schritt des Erzeugens von Vorwärtsstreulicht (38) durch Ausstrahlen der parallelen Lichtstrahlen (37) von einer Seite eines Blankdrahtes (22) aus löchriger Glasfaser zu dem Blankdraht (22) aus löchriger Glasfaser und Erhalten eines Streuintensitätsmusters (43, 44, 45) des Vorwärtsstreulichts (38);

einen Schritt des Berechnens eines Differenzspektrums zwischen dem Streuintensitätsmuster (42), das durch den Blankdraht aus lochloser Glasfaser erhalten wird und dem Streuintensitätsmuster (43, 44, 45), das durch den Blankdraht (22) aus löchriger Glasfaser erhalten wird; und

einen Schritt des Berechnens des Lochdurchmessers (d) aus dem Differenzspektrum unter Verwendung einer vorbestimmten Korrelationsbeziehung zwischen einem Differenzspektrum und einem Lochdurchmesser, wobei die vorbestimmte Korrelationsbeziehung die Korrelation zwischen dem Lochdurchmesser und der Breite (W) eines mittleren Abschnitts des Differenzspektrums ist.

2. Verfahren zum Messen von Lochdurchmessern (d) in einer löchrigen Glasfaser nach Anspruch 1, wobei die parallelen Lichtstrahlen (37) zu einem Blankdraht aus löchriger Glasfaser, auf dem kein Überzug ausgebildet ist, ausgestrahlt werden.

3. Verfahren zum Messen von Lochdurchmessern (d) in einer löchrigen Glasfaser nach Anspruch 1, wobei die parallelen Lichtstrahlen (37) zu dem Glasfaser-Blankdraht (22) aus mindestens zwei Richtungen ausgestrahlt werden.

4. Verfahren zum Messen von Lochdurchmessern (d) in einer löchrigen Glasfaser (22) nach Anspruch 1, wobei ein Abstand zwischen dem Blankdraht (22) aus löchriger Glasfaser und dem Erfassungsabschnitt (32; 32A; 32B) gemessen wird, und das Vorwärtsstreulicht (38) fortlaufend erfasst wird, während eine Position des Erfassungsabschnitts (32; 32A; 32B) auf Grundlage eines Messergebnisses eingestellt wird, sodass der Abstand konstant ist.

5. Herstellungsverfahren für eine löchrige Glasfaser, das einen Blankdraht (22) aus löchriger Glasfaser durch Erwärmen und Schmelzen eines Basismaterials (21) aus löchriger Glasfaser, das mehrere Löcher (22a) aufweist, die sich entlang einer Längsrichtung des Basismaterials (21) aus löchriger Glasfaser erstrecken und daran angeordnet sind, und durch Ziehen desselben herstellt, wobei das Verfahren aufweist:

   einen Schritt des fortlaufenden Ausstrahlens paralleler Lichtstrahlen (37) von einer Seite des Blankdrahtes (22) aus löchriger Glasfaser zu dem Blankdraht (22) aus löchriger Glasfaser;
   einen Schritt des fortlaufenden Erfassens eines Vorwärtsstreulichts (38), das durch ein Ausstrahlen der parallelen Lichtstrahlen (37) erzeugt wird, mit einem Erfassungsabschnitt (32; 32A; 32B);
   einen Schritt des Erzeugens von Vorwärtsstreulicht (38) durch Ausstrahlen der parallelen Lichtstrahlen (37) von einer Seite eines Blankdrahtes aus lochloser Glasfaser zu dem Blankdraht aus lochloser Glasfaser und erhalten eines Streuintensitätsmusters (42) des Vorwärtsstreulichts(38) ;
   einen Schritt des Erzeugens von Vorwärtsstreulicht (38) durch Ausstrahlen der parallelen Lichtstrahlen (37) von einer Seite eines Blankdrahtes (22) aus löchriger Glasfaser zu dem Blankdraht (22) aus löchriger Glasfaser und Erhalten eines Streuintensitätsmusters (43, 44, 45) des Vorwärtsstreulichts (38);
   einen Schritt des Berechnens eines Differenzspektrums zwischen dem Streuintensitätsmuster (42), das durch den Blankdraht aus lochloser Glasfaser erhalten wird und
   dem Streuintensitätsmuster (43, 44, 45), das durch den Blankdraht (22) aus löchriger Glasfaser erhalten wird;
   einen Schritt des Berechnens des Lochdurchmessers (d) aus dem Differenzspektrum unter Verwendung einer vorbestimmten Korrelationsbeziehung zwischen einem Differenzspektrum und einem Lochdurchmesser, wobei die vorbestimmte Korrelationsbeziehung die Korrelation zwischen dem Lochdurchmesser und der Breite (W) eines mittleren Abschnitts des Differenzspektrums ist; und
   einen Schritt des Anpassens eines Drucks in einem Loch durch Steuern einer Strömungsrate eines Gases, das dem Loch des Basismaterials (21) aus löchriger Glasfaser in Übereinstimmung mit dem berechneten Lochdurchmesser (d) zugeführt wird.

6. Verfahren zum Herstellen einer löchrigen Glasfaser nach Anspruch 5, das ferner aufweist:

   einen Schritt des Ausstrahlens der parallelen Lichtstrahlen (37) zu dem Glasfaser-Blankdraht (22) aus mindestens zwei Richtungen.

7. Verfahren zum Herstellen einer löchrigen Glasfaser nach Anspruch 5, das ferner aufweist:

   einen Schritt des Messens eines Abstands zwischen dem Blankdraht (22) aus löchriger Glasfaser und dem Erfassungsabschnitt (32; 32A; 32B), und fortlaufendes Erfassen des Vorwärtsstreulichts (38), während die Position des Erfassungsabschnitts (32; 32A; 32B) auf Grundlage des Messergebnisses eingestellt wird, sodass der Abstand konstant ist.

**EP 2 418 469 B1**

**Revendications**

1. Procédé de mesure de diamètre de trou (d) pour une fibre optique à trou qui, lors de la fabrication d'un fil nu de fibre optique à trou (22) par le chauffage et la fusion d'un matériau de base de fibre optique à trou (21) comportant une pluralité de trous (22a) s'étendant et agencés dans un sens longitudinal du matériau de base de fibre optique à trou (21) et le tirage de celui-ci, mesure un diamètre (d) d'un trou (22a) du fil nu de fibre optique (22), le procédé comprenant :

   une étape de l'irradiation continue de rayons lumineux parallèles (37) depuis un côté du fil nu de fibre optique à trou (22) qui est obtenu par le tirage jusqu'au fil nu de fibre optique à trou (22) ;
   une étape de la détection continue, avec une portion de détection (32 ; 32A ; 32B), d'une lumière se diffusant vers l'avant (38) qui est générée par une irradiation des rayons lumineux parallèles (37) ;
   une étape de la génération d'une lumière se diffusant vers l'avant (38) par l'irradiation des rayons lumineux parallèles (37) depuis un côté d'un fil nu de fibre optique sans trou jusqu'au fil nu de fibre optique sans trou et l'obtention d'un motif d'intensité de diffusion (42) de la lumière se diffusant vers l'avant (38) ;
   une étape de la génération d'une lumière se diffusant vers l'avant (38) par l'irradiation des rayons lumineux parallèles (37) depuis un côté du fil nu de fibre optique à trou (22) jusqu'au fil nu de fibre optique à trou (22) et l'obtention d'un motif d'intensité de diffusion (43, 44, 45) de la lumière se diffusant vers l'avant (38) ;
   une étape du calcul d'un spectre de différence entre le motif d'intensité de diffusion (42) qui est obtenu par le fil nu de fibre optique sans trou et le motif d'intensité de diffusion (43, 44, 45) qui est obtenu par le fil nu de fibre optique à trou (22) ; et
   une étape du calcul du diamètre de trou (d) à partir du spectre de différence en utilisant une relation de corrélation prédéterminée entre un spectre de différence et un diamètre de trou, la relation de corrélation prédéterminée étant la corrélation entre le diamètre de trou et la largeur (W) d'une portion centrale du spectre de différence.

2. Procédé de mesure de diamètre de trou (d) pour une fibre optique à trou selon la revendication 1, dans lequel les rayons lumineux parallèles (37) sont irradiés sur un fil nu de fibre optique à trou sur lequel un revêtement n'est pas formé.

3. Procédé de mesure de diamètre de trou (d) pour une fibre optique à trou selon la revendication 1, dans lequel les rayons lumineux parallèles (37) sont irradiés sur le fil nu de fibre optique (22) depuis au moins deux sens.

4. Procédé de mesure de diamètre de trou (d) pour une fibre optique à trou (22) selon la revendication 1, dans lequel une distance entre le fil nu de fibre optique à trou (22) et la portion de détection (32 ; 32A ; 32B) est mesurée, et la lumière se diffusant vers l'avant (38) est continuellement détectée tout en ajustant une position de la portion de détection (32 ; 32A ; 32B) sur la base d'un résultat de mesure de sorte que la distance soit constante.

5. Procédé de fabrication pour une fibre optique à trou qui fabrique un fil nu de fibre optique à trou (22) par le chauffage et la fusion d'un matériau de base de fibre optique à trou (21) comportant une pluralité de trous (22a) s'étendant et agencés dans un sens longitudinal du matériau de base de fibre optique à trou (21) et le tirage de celui-ci, le procédé comprenant :

   une étape de l'irradiation continue de rayons lumineux parallèles (37) depuis un côté du fil nu de fibre optique à trou (22) jusqu'au fil nu de fibre optique à trou (22) ;
   une étape de la détection continue, avec une portion de détection (32 ; 32A ; 32B), d'une lumière se diffusant vers l'avant (38) qui est générée par une irradiation des rayons lumineux parallèles (37) ;
   une étape de la génération d'une lumière se diffusant vers l'avant (38) par l'irradiation des rayons lumineux parallèles (37) depuis un côté d'un fil nu de fibre optique sans trou jusqu'au fil nu de fibre optique sans trou et l'obtention d'un motif d'intensité de diffusion (42) de la lumière se diffusant vers l'avant (38) ;
   une étape de la génération d'une lumière se diffusant vers l'avant (38) par l'irradiation des rayons lumineux parallèles (37) depuis un côté du fil nu de fibre optique à trou (22) jusqu'au fil nu de fibre optique à trou (22) et l'obtention d'un motif d'intensité de diffusion (43, 44, 45) de la lumière se diffusant vers l'avant (38) ;
   une étape du calcul d'un spectre de différence entre le motif d'intensité de diffusion (42) qui est obtenu par le fil nu de fibre optique sans trou et le motif d'intensité de diffusion (43, 44, 45) qui est obtenu par le fil nu de fibre optique à trou (22) ;
   une étape du calcul du diamètre de trou (d) à partir du spectre de différence en utilisant une relation de corrélation prédéterminée entre un spectre de différence et un diamètre de trou, la relation de corrélation prédéterminée étant la corrélation entre le diamètre de trou et la largeur (W) d'une portion centrale du spectre de différence ; et

une étape de l'ajustement d'une pression dans un trou par la commande d'un débit d'un gaz qui est fourni au trou du matériau de base de fibre optique à trou (21) en fonction du diamètre de trou (d) calculé.

6. Procédé de fabrication pour une fibre optique à trou selon la revendication 5, comprenant en outre :

une étape de l'irradiation des rayons lumineux parallèles (37) sur un fil nu de fibre optique (22) depuis au moins deux sens.

7. Procédé de fabrication pour une fibre optique à trou selon la revendication 5, comprenant en outre :

une étape de la mesure d'une distance entre le fil nu de fibre optique à trou (22) et la portion de détection (32 ; 32A ; 32B), et la détection continue de la lumière se diffusant vers l'avant (38) tout en ajustant la position de la portion de détection (32 ; 32A ; 32B) sur la base d'un résultat de mesure de sorte que la distance soit constante.

# FIG. 1

# FIG. 2

# FIG. 3

# FIG. 4A

# FIG. 4B

FIG. 5

FIG. 6

# FIG. 7A

# FIG. 7B

# FIG. 8A

# FIG. 8B

# FIG. 9A

RECEIVED LIGHT INTENSITY

W

$W_m$

RECEIVED LIGHT POSITION

# FIG. 9B

RECEIVED LIGHT INTENSITY

HOLEY
OPTICAL FIBER

RECEIVED LIGHT POSITION

HOLE-LESS OPTICAL FIBER

# FIG. 9C

6
4
2
0
-2
-4
-6
-8
-10

$W_D$

RECEIVED LIGHT POSITION

# FIG. 10

# FIG. 11

# FIG. 12

# FIG. 13A

# FIG. 13B

FIG. 14

## FIG. 15A

9.3

RECEIVED LIGHT INTENSITY

RECEIVED LIGHT
POSITION
d=2.3 μm

## FIG. 15B

10.0

RECEIVED LIGHT INTENSITY

RECEIVED LIGHT
POSITION
d=3.8 μm

# FIG. 15C

10.4

RECEIVED LIGHT INTENSITY

RECEIVED LIGHT
POSITION
d=4.6 μm

# FIG. 15D

RECEIVED LIGHT INTENSITY

RECEIVED LIGHT
POSITION
HOLE-LESS

## FIG. 16

## FIG. 17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3433238 B
- JP 4084762 B
- US 5880825 A
- US 6313909 B
- WO 2005095930 A
- JP 2009007201 A